# EUROPEAN PATENT APPLICATION

(11) **EP 4 644 027 A1**
(43) Date of publication of application: **05.11.2025**
(21) Application number: 23919195.0
(22) Date of filing: 11.04.2023
(51) Int. Cl.: B23H 7/08

(54) **ELECTRODE WIRE FOR LOW-SPEED WIRE ELECTRIC DISCHARGE MACHINING**

(30) Priority: 30.01.2023 CN 202310099491
(71) Applicant: Ningbo Boway Alloy Hightech Wire Co., Ltd., Ningbo, Zhejiang 315000 (CN)
(72) Inventor: LIANG, Zhining, Ningbo, Zhejiang 315000 (CN); WAN, Linhui, Ningbo, Zhejiang 315000 (CN); WU, Tong, Ningbo, Zhejiang 315000 (CN); LUO, Xiaoqi, Ningbo, Zhejiang 315000 (CN)
(74) Representative: Metida
(86) International application number: PCT/CN2023/087672
(87) International publication number: WO 2024/159625

(57) **Abstract**

An electrode wire for low-speed electrical discharge machining is provided, The electrode wire comprises: a core material; an intermediate layer located externally to the core material; and a surface layer located externally to the intermediate layer; wherein the material of the core material is a metal or an alloy, and the material of the intermediate layer is a copper-zinc alloy, the material of the surface layer contains carbon element; and the content of the carbon element of the surface of the electrode wire is 0.2wt%-60wt%. The electrode wire provided in this invention exhibits excellent surface conductivity, enabling it to maintain a high cutting speed over extended periods while ensuring high machining accuracy. Additionally, its preparation process is simple and straightforward.

## Description

### TECHNICAL FIELD

The present disclosure relates to the field of wire cut electrical discharge machining, and more particularly, to an electrode wire for electrical discharge machining.

### BACKGROUND

The fundamental working principle of wire cut electrical discharge machining (abbreviated as WEDM) is to utilize a continuously moving thin metal wire (referred to as an electrode wire) as an electrode, which erodes metal through pulsed spark discharges and performs cutting and shaping on a workpiece. When machining a workpiece by WEDM, the workpiece is connected to the positive electrode of a high-frequency pulse power supply, and an electrode wire is connected to the negative electrode of the high-frequency pulse power supply as a tool electrode. The high-frequency pulse power supply provides a machining energy, and meanwhile a WEDM working fluid is applied during the machining process to remove the debris generated. When powered on and in operation, under the influence of a strong electric field, the surfaces of the positive and negative electrodes are bombarded by electron streams and ion streams respectively, forming an instantaneous high-temperature heat source in a gap between the workpiece and the electrode wire. This high-temperature heat source melts and vaporizes localized metal, thereby forming erosion pits both on the electrode wire and the workpiece, and simultaneously vaporizing the working fluid. The vaporized working fluid and a workpiece material vapor expand rapidly and instantaneously. Under the combined effects of this thermal expansion and the flushing action of the working fluid, the melted and vaporized workpiece material is ejected from the discharge gap, completing a single spark discharge process. This spark discharge process is repeated to cut the workpiece into the desired shape.

Process indicators of wire electrical discharge machining, such as cutting speed, cutting accuracy, and surface finish of the machined workpiece, are not only affected by the wire electrical discharge machining equipment but also closely related to the performance of the electrode wire used.

Electrode wires for wire electrical discharge machining have undergone four generations of product updates and development in the process of technical evolution: pure copper wires, brass wires, zinc-coated wires, and clad wires. Clad wires are plated with a high-zinc alloy layer (i.e., an alloy layer with a high zinc content) of a certain thickness on the surface of the electrode wire. A higher vaporization pressure is achieved by using the properties of high-zinc alloys, thereby helping to improve machining speed. Depending on the composition of the plated high-zinc alloy, clad wires may be classified into γ-clad wires, β-clad wires, and composite clad wires. Clad wires are currently a widely used type of electrode wire.

However, clad wires still have certain drawbacks in practical production and machining applications. Since the high-zinc alloy on the surface layer is easy to melt and vaporize and has poor discharge corrosion resistance, as the wire electrical discharge machining proceeds, the high-zinc alloy layer on the surface is consumed quickly and cannot maintain its surface effects over an extended period. With the disappearance of the high-zinc alloy layer on the surface, the cutting speed slows down, and the cutting accuracy also decreases accordingly.

### SUMMARY

The present specification aims to solve one of the technical problems in the related art to some extent at least. To this end, one object of the present specification is to provide an electrode wire for low-speed wire electrical discharge machining, which exhibits excellent surface-layer conductivity, may maintain a high cutting speed over an extended period, offers high cutting machining accuracy, and has a simple preparation process.

According to one aspect of the present invention, an electrode wire for low-speed wire electrical discharge machining is provided, which comprises: a core material; an intermediate layer located externally to the core material; and a surface layer located externally to the intermediate layer. The material of the core material is a metal or alloy, the material of the intermediate layer is a copper-zinc alloy, and the material of the surface layer contains carbon. The content of the carbon element of the surface of the electrode wire is 0.2wt%-60wt%.

The present specification offers the following beneficial effects:
1. The surface layer of the electrode wire for the low-speed wire electrical discharge machining in the present specification contains carbon element which possesses high electrical conductivity. This enhances the current transmission efficiency of the electrode wire during electrical discharge machining, thereby improving the cutting machining speed.
2. The Surface layer of the electrode wire for the low-speed wire electrical discharge machining in the present specification contains carbon element. Given a high melting point of the carbon element, the surface of the electrode wire exhibits high resistance to electrical discharge erosion. During the electrical discharge machining process, the surface layer of the electrode wire may maintain a relatively stable structure over an extended period, ensuring its long-term functionality and sustaining a high cutting machining speed. Meanwhile, the high resistance to electrical discharge erosion of the surface of the electrode wire enables a more stable discharge gap between the electrode wire and the workpiece during electrical discharge machining, achieving a more uniform and stable discharge intensity. This, in turn, enhances the cutting machining accuracy of the workpiece.
3. The content of the carbon element of the surface of the electrode wire for the low-speed wire electrical discharge machining in the present specification is restricted within a range of 0.2wt% - 60wt%, which ensures that the electrode wire achieves a high cutting rate while balancing both high cutting speed and high cutting accuracy while facilitating ease of production and manufacturing. Carbon element possesses characteristics of a high melting point and high vaporization temperature, making it difficult to vaporize during electrical discharge machining. As the content of carbon element in the surface layer of the electrode wire increases, the electrical conductivity of the electrode wire is enhanced which is beneficial for improving the cutting speed, the content of easily vaporizable components on the electrode wire surface is reduced simultaneously which diminishes the surface vaporization flushing effect, thereby exerting an adverse impact on the cutting speed. Moreover, an excessively high surface carbon element content may also cause the surface layer structure of the electrode wire to be prone to detachment, increasing the difficulty of electrode wire production and processing.

Preferably, the carbon content of the surface of the electrode wire is 1wt%-20wt%. Restricting the carbon element content of the surface of the electrode wire within the aforementioned range ensures a high cutting speed and cutting accuracy when the electrode wire is used for electrical discharge machining. Specifically, the content of the carbon element of the surface layer of the electrode wire may be 1wt%-15wt%, 1wt%-10wt%, 1.5wt%-20wt%, 1.5wt%-15wt%, or 1.5wt%-10wt%.

Preferably, at least a portion of the carbon element in the surface layer exists in a form of elemental carbon. Elemental carbon exhibits a high electrical conductivity and a high melting point. The presence of carbon element in the surface layer in the form of elemental carbon further helps to enhances the conductivity and surface resistance to electrical discharge erosion of the electrode wire, thereby improving the cutting machining speed and accuracy.

Preferably, the elemental carbon includes a graphite and/or an amorphous carbon. Graphite and amorphous carbon exhibit excellent electrical conductivity. An electrode wire with a surface layer containing graphite and/or amorphous carbon demonstrates a higher cutting machining speed.

Preferably, the surface layer covers the outside of the intermediate layer discontinuously, and the intermediate layer and/or the core material is exposed at discontinuous positions of the surface layer. When the surface layer discontinuously covers the outside of the intermediate layer, sharp tips are formed at the discontinuous positions. These tips are more prone to electrical discharge which may reduce the reaction time for the electrode wire to generate electrical sparks during wire electrical discharge machining. Meanwhile, the exposed intermediate layer or the exposed core material may further enhance the electrical conductivity of the surface layer, facilitating the transmission of discharge energy and thus further improving the cutting speed.

Preferably, the copper-zinc alloy in the intermediate layer includes at least one of the following materials: a β-phase copper-zinc alloy, a β'-phase copper-zinc alloy, or a γ-phase copper-zinc alloy. The β-phase copper-zinc alloy and the β'-phase copper-zinc alloy exhibit high electrical conductivity, which may enhance the discharge efficiency and thereby improve the cutting speed. The γ-phase copper-zinc alloy, with a high zinc content, demonstrates a significant vaporization flushing effects during wire electrical discharge machining, which is also conducive to increasing the cutting speed. The β'-phase remains stable under a specific temperature and features an ordered lattice structure; if said specific temperature is exceeded, the β'-phase transforms into a disordered β-phase. According to general understanding, the phase transition between β-phase and β'-phase is inevitable, yet it has minimal impact on their mechanical and electrical characteristics. Therefore, within the context of the present specification, unless explicitly distinguished, references to the β-phase also imply references to the β'-phase.

Preferably, the intermediate layer has cracks. Tips are formed at these cracks, and these tips are more prone to electrical discharge. During wire electrical discharge machining, the reaction time for the electrode wire to generate electrical sparks may be reduced, thereby accelerating the cutting speed of the wire electrical discharge machining. Additionally, the cracks may also enhance the cutting speed by increasing the contact area between the electrode wire and the working fluid. Therefore, after the surface layer is consumed, the crack structure of the intermediate layer may further accelerate the cutting speed.

Preferably, the material of the core material includes copper or a copper alloy. Copper or a copper alloy possess excellent electrical conductivity. Using a core material of said materials ensures that the electrode wire may have optimal performance.

Additional aspects and advantages of the present specification will be partially presented in the following description, and some will become apparent from the description below or be comprehended through the practice of the present specification.

### BRIEF DESCRICRIPTION OF THE DRAWINGS

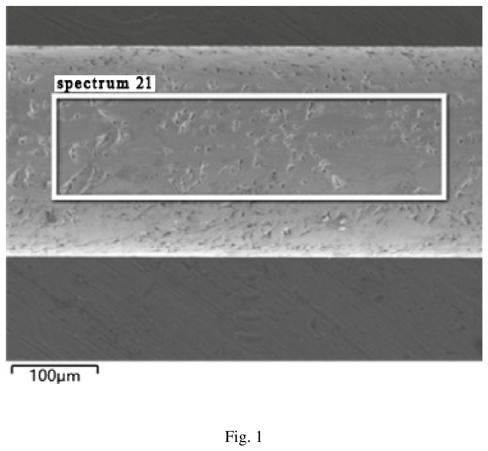

Figure 1 is a schematic view of the energy-dispersive spectroscopy (EDS) test for measuring the carbon content of the surface layer of the electrode wire in accordance with the present specification, conducted using a scanning electron microscope (SEM).

### DETAILED DESCRIPTION

The following provides a detailed description of the embodiments of the present specification. The embodiments described with reference to the accompanying drawings are illustrative and are intended to explain the present invention, rather than limiting it.

Now, the embodiments of the present invention will be described with reference to the accompanying drawings.

Before presenting specific implementations, relevant explanations will be given regarding the composition, structural characteristics, and testing methods for the content of relevant components of the electrode wire for the low-speed wire electrical discharge machining provided by the present specification:
When manufacturing a mother-bar, brass mother-bar is generally used. Specifically, brass mother-bar is typically made of CuZn37 brass or CuZn40 brass. It is also possible to prepare the mother-bar with use a red copper (i.e., pure copper), or copper alloys other than brass, or even other metals or alloys.

In the present specification, a carbon content of the surface of the electrode wire refers to a carbon element content in the outermost circumferential part of a finished electrode wire that is in contact with the environment. Hereinafter, the surface of the electrode wire is different from its surface layer. The surface layer of the electrode wire is a layered structure with a certain thickness located at the outermost part of the electrode wire, and the outermost part of the surface layer that is in contact with the environment constitutes part or all of the aforementioned surface of the electrode wire.

The carbon content of the surface of the electrode wire may be measured using elemental composition testing methods known in the art. In the examples of the present specification, the carbon content of the surface of the electrode wire is measured by performing energy-dispersive spectroscopy (EDS) testing on the surface of the electrode wire under a scanning electron microscope (SEM). Specifically, as shown in Figure 1, using conventional laboratory SEM and EDS equipment, an electrode wire sample is placed in a sample chamber. A rectangular testing area is selected on the surface of the electrode wire displayed by the SEM for EDS analysis. A length of the shorter side of the rectangular area is 1 - 2 times a radius of the electrode wire, and a length of the longer side is 1 - 5 times the length of the shorter side. The distribution of various elements is not entirely uniform across different parts of the same electrode wire. To measure the carbon content, the above-mentioned method is applied to several different locations on the same electrode wire. An average carbon content at different locations is then calculated to obtain the carbon content of the surface of the electrode wire. In the following examples of the present specification, surface carbon content measurements are taken at 10 different locations on the same electrode wire using the aforementioned SEM-EDS testing method. The average value of the 10 measured carbon content values is then used as the carbon content of the surface of the corresponding electrode wire.

The carbon content of the surface of the electrode wire ranges from 0.2wt% to 60wt%. When the carbon content of the surface of the electrode wire is too low, the relatively low levels of carbon-a material with high electrical conductivity and a high melting point-result in an insignificant improvement in the current transmission efficiency of the electrode wire during the electrical discharge machining, as well as in its ability to enhance cutting speed, maintain long-term surface performance, and improve cutting accuracy. Conversely, when the carbon content of the surface of the electrode wire is excessively high, the vaporization and flushing effects on the surface of the electrode wire are significantly reduced due to carbon's characteristics of a high melting point and high vaporization temperature, thereby decreasing the cutting speed. Moreover, an excessively high carbon content of the surface may also cause the surface layer structure of the electrode wire to detach easily, increasing the difficulty of electrode wire production and processing. By controlling the carbon content of the surface of the electrode wire within the aforementioned range, it is possible to ensure a high cutting rate for the electrode wire, balancing both high cutting speed and high cutting accuracy, while also facilitating ease of production and manufacturing.

The β'-phase remains stable under a specific temperature and features an ordered lattice structure; if said specific temperature is exceeded, the β'-phase transforms into a disordered β-phase. According to general understanding, the phase transition between β-phase and β'-phase is inevitable, yet it has minimal impact on their mechanical and electrical characteristics. Therefore, within the context of the present specification, unless explicitly distinguished, references to the β-phase also imply references to the β'-phase.

### Example 1:

The following process was employed to prepare the electrode wire for the low-speed wire electrical discharge machining in this example:
S100: providing a mother-bar made of CuZn37 brass with a wire diameter specification of 1.2 mm;
S101: electroplating zinc onto the surface of the mother-bar using an electroplating solution containing an additive, forming a 10-µm-thick zinc plating layer on the surface of the mother-bar to obtain a first wire blank; wherein the additive includes one or more selected from the following materials: oligofructose, sorbitol, dextrin, sucrose, lactose, and maltose, and the concentration of the additive in the electroplating solution is 15 g/L;
S102: heat-treating the first wire blank in a flowing air atmosphere at a temperature of 240°C for a duration of 45 hours, wherein, during the heat treatment process, the additive decomposes upon heating, resulting in an obtaining of a second wire blank, and the second wire blank sequentially includes, from inside to outside, a core material, a β-phase copper-zinc alloy layer, a γ-phase copper-zinc alloy layer, and a surface layer;
S103: subjecting the second wire blank to multi-stage continuous drawing and stress-relief annealing to obtain a finished electrode wire with a wire diameter specification of 0.25 mm.

The carbon content of the surface of the electrode wire prepared by the above steps was measured using electron scanning electron microscopy and energy-dispersive spectroscopy equipment. The carbon content of the surface of the electrode wire was measured at 10 different locations, and an average value was taken as the carbon content of the surface of the electrode wire. Additionally, the electrical conductivity and surface adhesion of the electrode wire prepared by the above process were measured. The test results are shown in Table 1.

The electrode wire prepared by the above process was tested using an AgieCharmilles E350 machine. The specification of the material of the test workpiece was 8407, with dimensions of 6 mm (length) * 6 mm (width) * 50 mm (thickness). The test machining pass selection was "one cut and four trims." The test results are shown in Table 2.

### Example 2

The following process was employed to prepare the electrode wire for the low-speed wire electrical discharge machining in this embodiment:
S100: providing a mother-bar made of CuZn40 brass with a wire diameter specification of 0.5 mm;
S101: electroplating zinc onto the surface of the mother-bar using an electroplating solution containing an additive, forming a 20-µm-thick zinc plating layer on the surface of the mother-bar to obtain a first wire blank; wherein the additive includes one or more selected from the following materials: oligofructose, sorbitol, dextrin, sucrose, lactose, and maltose, and the concentration of the additive in the electroplating solution is 10 g/L;
S102: heat-treating the first wire blank in a flowing air atmosphere at a temperature of 450°C for a duration of 25 hours, wherein during the heat treatment process, the additive decomposes upon heating, resulting in an obtaining of a second wire blank, and the second wire blank sequentially includes, from inside to outside, a core material, a β-phase copper-zinc alloy layer, and a surface layer;
S103: subjecting the second wire blank to multi-stage continuous drawing and stress-relief annealing to obtain a finished electrode wire with a wire diameter specification of 0.25 mm.

The carbon content of the surface of the electrode wire prepared by the above steps was measured using electron scanning electron microscopy and energy-dispersive spectroscopy equipment. The carbon content of the surface of the electrode wire was measured at 10 different locations, and an average value was taken as the carbon content of surface of the electrode wire. Additionally, the electrical conductivity and surface adhesion of the electrode wire prepared by the above process were measured. The test results are shown in Table 1.

The electrode wire prepared by the above process was tested using an AgieCharmilles E350 machine. The specification of the material of the test workpiece was 8407, with dimensions of 6 mm (length) * 6 mm (width) * 50 mm (thickness). The test machining pass selection was "one cut and four trims." The test results are shown in Table 2.

### Example 3

The following process was employed to prepare the electrode wire for the low-speed wire electrical discharge machining in this embodiment:
S100: providing a mother-bar made of CuZn40 brass with a wire diameter specification of 1 mm;
S101: electroplating zinc onto the surface of the mother-bar using an electroplating solution containing an additive, forming a 5-µm-thick zinc plating layer on the Surface of the mother-bar to obtain a first wire blank, wherein the additive includes one or more selected from the following materials: oligofructose, sorbitol, dextrin, sucrose, lactose, and maltose, and the concentration of the additive in the electroplating solution is 20 g/L;
S102: heat-treating the first wire blank in a flowing air atmosphere at a temperature of 175°C for a duration of 30 hours, wherein during the heat treatment process, the additive decomposes upon heating, resulting in an obtaining of a second wire blank, and the second wire blank sequentially includes, from the inside to outside, a core material, a γ-phase copper-zinc alloy layer, and a surface layer;
S103: subjecting the second wire blank to multi-stage continuous drawing and stress-relief annealing to obtain a finished electrode wire with a wire diameter specification of 0.25 mm.
The carbon content of the surface of the electrode wire prepared by the above steps was measured using electron scanning electron microscopy and energy-dispersive spectroscopy equipment. The carbon content of the surface of the electrode wire was measured at 10 different locations, and an average value was taken as the carbon content of the surface of the electrode wire. Additionally, the electrical conductivity and surface adhesion of the electrode wire prepared by the above steps were measured. The test results are shown in Table 1.
The electrode wire prepared by the above steps was tested using an AgieCharmilles E350 machine. The specification of the material of the test workpiece was 8407, with dimensions of 6 mm (length) * 6 mm (width) * 50 mm (thickness). The test machining pass selection was "one cut and four trims." The test results are shown in Table 2.

### Example 4

The following process was employed to prepare the electrode wire for the low-speed wire electrical discharge machining in this example:
S200: providing a mother-bar made of CuZn40 brass with a wire diameter specification of 1.2 mm;
S201: electroplating zinc onto the surface of the mother-bar using an electroplating solution containing an additive, forming a 25-µm-thick zinc plating layer on the mother-bar surface to obtain a first wire blank, wherein the additive includes one or more selected from the following materials: oligofructose, sorbitol, dextrin, sucrose, lactose, and maltose, and the concentration of the additive in the electroplating solution is 24 g/L;
S202: subjecting the first wire blank to multi-stage continuous drawing to obtain a second wire blank with a wire diameter specification of 0.55 mm;
S203: heat-treating the second wire blank in a flowing air atmosphere at a temperature of 450°C for a duration of 35 hours, wherein during the heat treatment process, the organic additive decomposes upon heating, resulting in an obtaining of a third wire blank, and the third wire blank sequentially includes, from inside to outside, a core material, a β-phase copper-zinc alloy layer, and a surface layer;
S204: subjecting the third wire blank to multi-stage continuous drawing and stress-relief annealing to obtain a finished electrode wire with a wire diameter specification of 0.25 mm.
The carbon content of the surface of the electrode wire prepared by the above process was measured using electron scanning electron microscopy and energy-dispersive spectroscopy equipment. The carbon content of the surface of the electrode wire was measured at 10 different locations, and an average value was taken as the carbon content of the surface of the electrode wire. Additionally, the electrical conductivity and surface adhesion of the electrode wire prepared by the above process were determined. The test results are shown in Table 1.
The electrode wire prepared by the above process was tested using an AgieCharmilles E350 machine. The specification of the material of the test workpiece was 8407, with dimensions of 6 mm (length) * 6 mm (width) * 50 mm (thickness). The test machining pass selection was "one cut and four trims." The test results are shown in Table 2.

### Example 5

The following process was employed to prepare the electrode wire for the low-speed wire electrical discharge machining in this example:
S200: providing a mother-bar made of CuZn37 brass with a wire diameter specification of 0.95 mm;
S201: electroplating zinc onto the surface of the mother-bar using an electroplating solution containing an additive, forming a 15-µm-thick zinc plating layer on the mother-bar surface to obtain a first wire blank, wherein the additive includes one or more selected from the following materials: oligofructose, sorbitol, dextrin, sucrose, lactose, and maltose, and the concentration of the additive in the electroplating solution is 22 g/L;
S202: subjecting the first wire blank to multi-stage continuous drawing to obatin a second wire blank with a wire diameter specification of 0.5 mm;
S203: heat-treating on the second wire blank in a flowing air atmosphere at a temperature of 350°C for a duration of 35 hours, wherein the organic additive decomposes upon heating during the heat treatment process, resulting in an obtaining of a third wire blank, and the third wire blank sequentially includes, from inside to outside, a core material, a β-phase copper-zinc alloy layer, and a surface layer;
S204: subjecting the third wire blank to multi-stage continuous drawing and stress-relief annealing to obtain a finished electrode wire with a wire diameter specification of 0.25 mm.
The carbon content of the surface of the electrode wire prepared by the above process was measured using electron scanning electron microscopy and energy-dispersive spectroscopy equipment. The carbon content of the surface of the electrode wire was measured at 10 different locations, and an average value was taken as the carbon content of surface of the electrode wire. Additionally, the electrical conductivity and surface adhesion of the electrode wire prepared by the above process were measured. The test results are shown in Table 1.
The electrode wire prepared by the above process was tested using an AgieCharmilles E350 machine. The specification of the material of the test workpiece was 8407, with dimensions of 6 mm (length) * 6 mm (width) * 50 mm (thickness). The test machining pass selection was "one cut and four trims." The test results are shown in Table 2.

### Example 6

The following process was employed to prepare the electrode wire for the low-speed wire electrical discharge machining in this example:
S200: providing a mother-bar made of CuZn37 brass with a wire diameter specification of 0.7 mm.
S201: electroplating zinc onto the surface of the mother-bar using an electroplating solution containing an additive, forming an 8-µm-thick zinc plating layer on the surface of the mother-bar to obtain a first wire blank, wherein the additive includes one or more selected from the following materials: oligofructose, sorbitol, dextrin, sucrose, lactose, and maltose, and the concentration of the additive in the electroplating solution is 12 g/L;

S202: subjecting the first wire blank to multi-stage continuous drawing to obtain a second wire blank with a wire diameter specification of 0.4 mm;
S203: heat-treating the second wire blank in a flowing air atmosphere at a temperature of 150°C for a duration of 30 hours, wherein the organic additive decomposes upon heating during the heat treatment process, resulting in an obtaining of a third wire blank, and the third wire blank sequentially includes, from inside to outside, a core material, a γ-phase copper-zinc alloy layer, and a surface layer;
S204: subjecting the third wire blank to multi-stage continuous drawing and stress-relief annealing to obtain a finished electrode wire with a wire diameter specification of 0.25 mm.
The carbon content of the surface of the electrode wire prepared by the above process was measured using electron scanning electron microscopy and energy-dispersive spectroscopy equipment. The carbon content of the surface of the electrode was measured at 10 different locations, and an average value was taken as the carbon content of the surface of the electrode wire. Additionally, the electrical conductivity and surface adhesion of the electrode wire prepared by the above process were measured. The test results are shown in Table 1.
The electrode wire prepared by the above process was tested using an AgieCharmilles E350 machine. The specification of the material of the test workpiece was 8407, with dimensions of 6 mm (length) * 6 mm (width) * 50 mm (thickness). The test machining pass selection was "one cut and four trims." The test results are shown in Table 2.

### Comparative Example 1

The following process was employed to prepare the electrode wire for the low-speed wire electrical discharge machining in Comparative Example 1:
S100: providing a mother-bar made of CuZn40 brass with a wire diameter specification of 0.5 mm.
S101: electroplating zinc onto the surface of the mother-bar using an electroplating solution containing an additive, forming a 35-µm-thick zinc plating layer on the mother-bar surface to obtain a first wire blank, wherein the additive includes one or more selected from the following materials: oligofructose, sorbitol, dextrin, sucrose, lactose, and maltose, and the concentration of the additive in the electroplating solution is 25 g/L;

S102: heat-treating on the first wire blank in a flowing air atmosphere at a temperature of 450°C for a duration of 25 hours, resulting in an obtaining of a second wire blank, wherein the second wire blank sequentially includes, from inside to outside, a core material, a β-phase copper-zinc alloy layer, and a surface layer;
S103: subjecting the second wire blank to multi-stage continuous drawing and stress-relief annealing to obtain a finished electrode wire with a wire diameter specification of 0.25 mm.

### Comparative Example 2

The following process was used to prepare the electrode wire for the low-speed wire electrical discharge machining in Comparative Example 2:
S100: providing a mother-bar made of CuZn40 brass with a wire diameter specification of 1 mm;
S101: electroplating zinc onto the surface of the mother-bar using an electroplating solution containing an additive, forming a 2-µm-thick zinc plating layer on the mother-bar surface to obtain a first wire blank, wherein the additive includes one or more selected from the following materials: oligofructose, sorbitol, dextrin, sucrose, lactose, and maltose, and the concentration of the additives in the electroplating solution is 6 g/L;
S102: heat-treating the first wire blank in a flowing air atmosphere at a temperature of 175°C for a duration of 30 hours, resulting in an obtaining of a second wire blank, wherein the second wire blank sequentially includes, from inside to outside, a core material, a γ-phase copper-zinc alloy layer, and a surface layer;
S103: subjecting the second wire blank to multi-stage continuous drawing and stress-relief annealing to obtain a finished electrode wire with a wire diameter specification of 0.25 mm.

### Comparative Example 3

The following process was employed to prepare the electrode wire for the low-speed wire electrical discharge machining in Comparative Example 3:
S200: providing a mother-bar made of CuZn37 brass with a wire diameter specification of 0.95 mm;
S201: electroplating zinc onto the surface of the mother-bar using an electroplating solution containing an additive, forming a 28-µm-thick zinc plating layer on the mother-bar surface to obtain a first wire blank, wherein the additive includes one or more selected from the following materials: oligofructose, sorbitol, dextrin, sucrose, lactose, and maltose, and the concentration of the additives in the electroplating solution is 35 g/L;
S202: subjecting the first wire blank to multi-stage continuous drawing to obtain a second wire blank with a wire diameter specification of 0.5 mm;
S203: heat-treating the second wire blank in a flowing air atmosphere at a temperature of 350°C for a duration of 35 hours, resulting in an obtaining of a third wire blank, wherein the third wire blank sequentially includes, from inside to outside, a core material, a β-phase copper-zinc alloy layer, and a surface layer.;
S204: subjecting the third wire blank to multi-stage continuous drawing and stress-relief annealing to obtain a finished electrode wire with a wire diameter specification of 0.25 mm.

The carbon content of the surface of the electrode wires prepared in Comparative Examples 1-3 was measured using electron scanning electron microscopy and energy-dispersive spectroscopy equipment. The carbon content of the surface of the electrode wires was measured at 10 different locations for each electrode wire, and an average value was taken as the carbon content of the surface of the corresponding electrode wire. Additionally, the electrical conductivity and surface adhesion of the electrode wires prepared in Comparative Examples 1-3 were measured. The test results are shown in Table 1.

The electrode wires prepared in Comparative Examples 1-3 were tested using an AgieCharmilles E350 machine. The specification of the material of the test workpiece was 8407, with dimensions of 6 mm (length) * 6 mm (width) * 50 mm (thickness). The test machining pass selection was "one cut and four trims." The test results are shown in Table 2.

According to the test results, the surface carbon content of the electrode wire in the present specification ranges from 0.2wt to 60wt%, providing high cutting speed, high cutting accuracy, and tight surface adhesion. When the carbon content of the surface of the electrode wire is low, its electrical conductivity, cutting speed, and cutting accuracy are also low. When the carbon content of the surface of the electrode wire exceeds a relevant range, the cutting speed decreases, and the surface layer tends to peel off.

### Reference Examples 1-3

Reference Example 1: A brass electrode wire with a wire diameter specification of 0.25 mm was purchased.

Reference Example 2: A composite-coated electrode wire with a wire diameter specification of 0.25 mm was purchased.

Reference Example 3: A γ-coated electrode wire with a wire diameter specification of 0.25 mm was purchased.

The electrical conductivity of the electrode wires prepared in Reference Examples 1-3 was measured. The test results are shown in Table 1.
The electrode wires prepared in Reference Examples 1-3 were tested using an AgieCharmilles E350 machine. The specification of the material of the test workpiece was 8407, with dimensions of 6 mm (length) * 6 mm (width) * 50 mm (thickness). The test machining pass selection was "one cut and four trims." The test results are shown in Table 2.
According to the test results, the electrode wire in the present specification exhibits superior cutting speed and cutting accuracy compared to conventional brass wires and coated wires.

**Table 1: Test results of carbon content of the surface of the electrode wire, electrical conductivity, and surface adhesion for electrode wires in the examples, comparative examples, and reference examples.**

| No. of electrode wire | Carbon content of the surface (wt%) | electrical conductivity (%IACS) | surface adhesion |
|---|---|---|---|
| Example 1 | 6 | 23 | surface layer discontinuously covering and tightly adhering |
| Example 2 | 10 | 24.6 | surface layer discontinuously covering and tightly adhering |
| Example 3 | 1 | 22.4 | surface layer discontinuously covering and tightly adhering |
| Example 4 | 60 | 25 | surface layer discontinuously covering and tightly adhering |
| Example 5 | 20 | 24.8 | surface layer discontinuously covering and tightly adhering |
| Example 6 | 0.2 | 22 | surface layer discontinuously covering and tightly adhering |
| Comparative Example 1 | 65 | 23.5 | surface layer discontinuously covering and partially peeling |
| Comparative Example 2 | 0.1 | 21 | surface layer discontinuously covering and tightly adhering |
| Comparative Example 3 | 70 | 22.8 | surface layer discontinuously covering and partially peeling |
| Reference Example 1 | / | 20 | / |
| Reference Example 2 | / | 19.5 | / |
| Reference Example 3 | / | 20 | / |

**Table 2: Test results of cutting speed and cutting accuracy for electrode wires in the examples, comparative examples, and reference examples.**

| No. of electrode wire | cutting speed (mm2/min) | Cutting Speed Improvement Degree | cutting accuracy (µm) |
|---|---|---|---|
| Example 1 | 144 | 20% | ±1 |
| Example 2 | 149 | 24.17% | ±2 |
| Example 3 | 143 | 19.17% | ±1 |
| Example 4 | 147 | 22.5% | ±3 |
| Example 5 | 148 | 23.33% | ±2 |
| Example 6 | 142 | 18.33% | ±2 |
| Comparative Example 1 | 138 | 15% | ±4 |
| Comparative Example 2 | 134 | 11.67% | ±3 |
| Comparative Example 3 | 136 | 13.33% | ±4 |
| Reference Example 1 | 120 | 0 | ±5 |
| Reference Example 2 | 124 | 3.33% | ±4 |
| Reference Example 3 | 126 | 5% | ±4 |

Although the embodiments of the present specification have been shown and described above, it should be understood that the aforementioned embodiments are illustrative and should not be construed as limiting the present invention. Those of ordinary skill in the art may make variations, modifications, substitutions, and alterations to the aforementioned embodiments within the scope of the present specification.

## Claims

1. An electrode wire for low-speed electrical discharge machining, comprising:
a core material;
an intermediate layer located externally to the core material; and
a surface layer located externally to the intermediate layer;
wherein the material of the core material is a metal or an alloy, and the material of the intermediate layer is a copper-zinc alloy, the material of the surface layer contains carbon element; and
the content of the carbon element of the surface of the electrode wire is 0.2wt%-60wt%.

2. The electrode wire for the low-speed electrical discharge machining according to claim 1, wherein:
the content of the carbon content of the surface of the electrode wire is 1wt%-20wt%.

3. The electrode wire for the low-speed electrical discharge machining according to claim 1, wherein: at least a portion of the carbon element in the surface layer exists in a form of elemental carbon.

4. The electrode wire for the low-speed electrical discharge machining according to claim 3, wherein: the elemental carbon includes a graphite and/or an amorphous carbon.

5. The electrode wire for the low-speed electrical discharge machining according to any one of claims 1-4, wherein: the surface layer covers the outside of the intermediate layer discontinuously, and the intermediate layer and/or the core material is exposed at the discontinuous positions of the surface layer.

6. The electrode wire for the low-speed electrical discharge machining according to any one of claims 1-4, wherein: the copper-zinc alloy in the intermediate layer includes at least one of the following materials: a β-phase copper-zinc alloy, a β'-phase copper-zinc alloy and a γ-phase copper-zinc alloy.

7. The electrode wire for the low-speed electrical discharge machining according to any one of claims 1-4, wherein: the intermediate layer has cracks.

8. The electrode wire for the low-speed electrical discharge machining according to any one of claims 1-4, wherein: the material of the core material includes copper or a copper alloy.
